# EUROPÄISCHE PATENTANMELDUNG

(11) **EP 3 950 182 A1**
(43) Veröffentlichungstag der Anmeldung: **09.02.2022**
(21) Anmeldenummer: 21185818.8
(22) Anmeldetag: 15.07.2021
(51) Int. Cl.: B22F 3/105, B22F 3/14, B28B 3/02, B30B 15/34, C04B 35/645

(54) **SINTERVORRICHTUNG ZUM FELDUNTERSTÜTZTEN SINTERN**

(30) Priorität: 07.08.2020 DE 102020210034
(71) Anmelder: Dr. Fritsch Sondermaschinen GmbH, 70736 Fellbach (DE)
(72) Erfinder: Weber, Gerhard, 71364 Winnenden (DE); Weber, Karl, 71364 Winnenden (DE); Wilkinson, Ute, 71364 Winnenden (DE)
(74) Vertreter: Patentanwälte Ruff, Wilhelm, Beier, Dauster & Partner mbB

(57) **Zusammenfassung**

1. Sintervorrichtung zum feldunterstützen Sintern.
2.1 Eine derartige Sintervorrichtung aufweisend wenigstens eine elektrisch leitfähige Matrize mit einem Aufnahmeraum, der zum Aufnehmen eines zu sinternden Sintermaterials, insbesondere in Form eines Grünlings, vorgesehen ist, eine erste Stelleinrichtung und wenigstens einen Formstempel, der mittels der ersten Stelleinrichtung entlang einer ersten Stellachse relativ zu dem Aufnahmeraum in eine Pressstellung stellbeweglich ist, in welcher der wenigstens eine Formstempel zur mechanischen Druckbeaufschlagung des Sintermaterials mit einer ersten Druckkraft axial in den Aufnahmeraum eingetaucht ist, und aufweisend eine Widerstandsheizeinrichtung, die zum Heizen der Matrize mittels einer elektrischen Strombeaufschlagung derselben eingerichtet ist, ist bekannt.
2.2 Erfindungsgemäß sind der Widerstandsheizeinrichtung eine zweite Stelleinrichtung und wenigstens ein Kontaktstempel zugeordnet, der mittels der zweiten Stelleinrichtung entlang einer zweiten Stellachse relativ zu der Matrize in eine Kontaktstellung stellbeweglich ist, in welcher der wenigstens eine Kontaktstempel zur elektrischen Strombeaufschlagung der Matrize mit einer zweiten Druckkraft an eine Außenfläche der Matrize gepresst ist.
2.3 Verwendung beim feldunterstützten Sintern.
3. Fig. 1

## Beschreibung

Die Erfindung betrifft eine Sintervorrichtung zum feldunterstützten Sintern, aufweisend wenigstens eine elektrisch leitfähige Matrize mit einem Aufnahmeraum, der zum Aufnehmen eines zu sinternden Sintermaterials, insbesondere in Form eines Grünlings, vorgesehen ist, eine erste Stelleinrichtung und wenigstens einen Formstempel, der mittels der ersten Stelleinrichtung entlang einer ersten Stellachse relativ zu dem Aufnahmeraum in eine Pressstellung stellbeweglich ist, in welche der wenigstens eine Formstempel zur mechanischen Druckbeaufschlagung des Sintermaterials mit einer ersten Druckkraft axial in den Aufnahmeraum eingetaucht ist, und aufweisend eine Widerstandsheizeinrichtung, die zum Heizen der Matrize mittels einer elektrischen Strombeaufschlagung derselben eingerichtet ist.

Eine derartige Sintervorrichtung ist aus der WO 2017/177995 A1 bekannt und zum feldunterstützten Sintern vorgesehen. Das sogenannte feldunterstützte Sintern ist auch unter den Abkürzungen FAST (engl. Field Assisted Sintering Technology) und SPS (engl. Spark Plasma Sintering) bekannt. Die bekannte Sintervorrichtung weist eine elektrisch leitfähige Matrize in Gestalt einer Ringform, in welche das zu sinternde Sintermaterial eingebracht wird, und zwei gegenläufig axial in die Ringform eintauchbare Formstempel auf. Zudem ist eine Widerstandsheizeinrichtung mit einer gepulsten Gleichstromquelle und zwei Elektroden vorgesehen. Die Elektroden sind druckkraftübertragend und elektrisch leitend an Rückseiten der Formstempel abgestützt. Zur Druckkraftbeaufschlagung des Sintermaterials wirkt eine Stelleinrichtung rückseitig auf die Elektroden und bewegt diese gemeinsam mit den Formstempeln entlang einer Stellachse aufeinander zu. Gleichzeitig wird zum Heizen der Matrize ein gepulster Gleichstrom über die Elektroden in die Formstempel und von diesen in die Matrize geleitet. Infolge des elektrischen Widerstands der Matrize wird diese aufgeheizt und hierdurch die zum Sintern erforderliche Wärmebeaufschlagung des Sintermaterials bewirkt.

Aufgabe der Erfindung ist es, eine Sintervorrichtung der eingangs genannten Art bereitzustellen, die gegenüber dem Stand der Technik verbesserte Eigenschaften aufweist und insbesondere eine verbesserte Druckbeaufschlagung sowie Wärmebeaufschlagung des Sintermaterials ermöglicht.

Diese Aufgabe wird dadurch gelöst, dass der Widerstandsheizeinrichtung eine zweite Stelleinrichtung und wenigstens ein Kontaktstempel zugeordnet sind, der mittels der zweiten Stelleinrichtung entlang einer zweiten Stellachse relativ zu der Matrize in eine Kontaktstellung stellbeweglich ist, in welcher der wenigstens eine Kontaktstempel zur elektrischen Strombeaufschlagung der Matrize mit einer zweiten Druckkraft an eine Außenfläche der Matrize gepresst ist. Durch die erfindungsgemäße Lösung kann die mechanische Druckbeaufschlagung des Sintermaterials unabhängig von der elektrischen Strombeaufschlagung der Matrize erfolgen und umgekehrt. Denn im Unterschied zu üblichen Sintervorrichtungen zum feldunterstützten Sintern wird die Matrize nicht etwa über den gleichzeitig zur mechanischen Druckbeaufschlagung vorgesehenen wenigstens einen Formstempel mit Strom beaufschlagt. Stattdessen erfolgt die Strombeaufschlagung erfindungsgemäß über den wenigstens einen Kontaktstempel und die Druckbeaufschlagung erfolgt über den wenigstens einen Formstempel. Insoweit kann vereinfachend auch von einem getrennten und/oder unabhängigen Kraft- und Stromfluss gesprochen werden. Durch die erfindungsgemäße Lösung kann der wenigstens eine Kontaktstempel gezielt im Hinblick auf die elektrische Strombeaufschlagung und unabhängig von Erfordernissen der mechanischen Druckbeaufschlagung gestaltet werden. Gleichzeitig kann der wenigstens eine Formstempel gezielt im Hinblick auf die mechanische Druckbeaufschlagung und unabhängig von Erfordernissen der elektrischen Strombeaufschlagung gestaltet werden. Beispielsweise können der wenigstens eine Formstempel und der wenigstens eine Kontaktstempel vorteilhaft aus unterschiedlichen Werkstoffen gefertigt sein und/oder unterschiedliche Abmessungen - insbesondere unterschiedliche Querschnitte zur mechanischen Kraft- bzw. elektrischen Energieübertragung und/oder unterschiedliche Kontaktflächen zur Kontaktierung des Sintermaterials bzw. der Außenfläche der Matrize - aufweisen. Insoweit ist erfindungsgemäß nicht zwingend erforderlich, dass der wenigstens eine Formstempel aus einem elektrisch leitfähigen Werkstoff gefertigt ist. Stattdessen kann vorteilhaft ein besonders druckstabiler Werkstoff, insbesondere Keramik oder dergleichen, verwendet werden. Gleichzeitig ist erfindungsgemäß nicht zwingend erforderlich, dass der wenigstens eine Kontaktstempel aus einem besonders druckstabilen Werkstoff gefertigt ist. Stattdessen kann vorteilhaft ein besonders leitfähiger Werkstoff zum Einsatz kommen. Weiter ist erfindungsgemäß vorgesehen, dass der wenigstens eine Formstempel mittels der ersten Stelleinrichtung stellbeweglich ist, und dass der wenigstens eine Kontaktstempel mittels der zweiten Stelleinrichtung stellbeweglich ist. Die erste Stelleinrichtung bewirkt die erste Druckkraft zur Druckkraftbeaufschlagung des Sintermaterials. Die zweite Stelleinrichtung bewirkt die zweite Druckkraft zum Anpressen des wenigstens einen Kontaktstempels an die Außenfläche der Matrize. Hierdurch kann die zweite Druckkraft gezielt im Hinblick auf einen elektrischen Kontaktwiderstand zwischen dem wenigstens einen Kontaktstempel und der Außenfläche und unabhängig von der zu erzielenden Druckbeaufschlagung des Sintermaterials eingestellt werden. Gleichzeitig kann die erste Druckkraft gezielt im Hinblick auf die Druckkraftbeaufschlagung des Sintermaterials und unabhängig von dem zu erzielenden Kontaktwiderstand zwischen dem wenigstens einen Kontaktstempel und der Außenfläche eingestellt werden. Die erfindungsgemäße Lösung bietet besondere Vorteile, wenn der wenigstens eine Formstempel im Vergleich zu der Matrize eine kleine Querschnittsfläche und/oder Masse aufweist. Bei Sintervorrichtungen aus dem Stand der Technik kann unter diesen Voraussetzungen unter Umständen keine ausreichende Strom- und damit Wärmebeaufschlagung erreicht werden, da der Querschnitt und/oder die Masse des Formstempels hierfür in Relation zu der Matrize zu gering ist. Bei der erfindungsgemäßen Lösung spielt dies keine Rolle, da die Strom- und damit Wärmebeaufschlagung unabhängig von dem wenigstens einen Formstempel über den wenigstens einen Kontaktstempel erfolgt. Die erfindungsgemäße Lösung bietet zudem besondere Vorteile, wenn lediglich eine vergleichsweise geringe Druckkraftbeaufschlagung des Sintermaterials erforderlich ist, beispielsweise weil dieses eine flüssige Phase aufweist. Bei Sintervorrichtungen aus dem Stand der Technik kann unter diesen Voraussetzungen unter Umständen keine optimale Strom- und damit auch Wärmebeaufschlagung erfolgen, da der elektrische Kontaktwiderstand infolge der vergleichsweise geringen Presskraft zu hoch ist. Die erfindungsgemäße Lösung gewährleistet stattdessen, dass auch bei einer vergleichsweise geringen ersten Druckkraft zur Druckkraftbeaufschlagung ein hinreichend geringer elektrischer Kontaktwiderstand erreicht werden kann. Denn die für den erzielbaren elektrischen Kontaktwiderstand maßgebliche zweite Druckkraft wird unabhängig von dem wenigstens einen Formstempel mit dem wenigstens einen Kontaktstempel aufgebracht. Die Matrize kann auch als Form oder Sinterform bezeichnet werden. Die erste Druckkraft kann auch als Presskraft bezeichnet werden. Die zweite Druckkraft kann auch als Kontaktkraft bezeichnet werden. Die erste Stellachse und die zweite Stellachse können insbesondere parallel, koaxial oder senkrecht zueinander orientiert sein. In Ausgestaltung der Erfindung können mehrere Formstempel und/oder mehrere Kontaktstempel vorgesehen sein. Die erste Druckkraft und/oder die zweite Druckkraft wird vorzugsweise hydraulisch erzeugt. Dementsprechend ist die erste Stelleinrichtung und/oder die zweite Stelleinrichtung vorzugsweise eine hydraulische Stelleinrichtung, pneumatische Stelleinrichtung oder elektromotorische Stelleinrichtung. Insoweit können zum Aufbringen der ersten Druckkraft und/oder der zweiten Druckkraft jeweils wenigstens ein Hydraulikzylinder, Pneumatikzylinder und/oder eine motorbetriebene Spindel vorgesehen sein. Die erfindungsgemäße Sintervorrichtung ist zum feldunterstützten Sintern eingerichtet, wobei das feldunterstützte Sintern auch mit den Abkürzungen FAST (engl. Field Assisted Sintering Technology) und/oder SPS (engl. Spark Plasma Sintering) bezeichnet werden kann.

In Ausgestaltung der Erfindung ist eine Regeleinrichtung vorgesehen, die zum Regeln der ersten Druckkraft auf einen ersten Wert und zum Regeln der zweiten Druckkraft auf einen zweiten Wert eingerichtet ist. Hierdurch kann zum einen eine besonders präzise Druckkraftbeaufschlagung des Sintermaterials erreicht werden. Zum anderen kann durch das Regeln der zweiten Druckkraft der zwischen den wenigstens einen Kontaktstempel und der Außenfläche der Matrize auftretende elektrische Kontaktwiderstand gezielt beeinflusst und geregelt werden. Hierdurch kann eine nochmals verbesserte Strom- und damit Wärmebeaufschlagung erreicht werden. Die Regeleinrichtung kann alternativ oder zusätzlich zum Steuern der ersten Druckkraft und der zweiten Druckkraft eingerichtet und insoweit als bloße Steuereinrichtung gestaltet sein.

In weiterer Ausgestaltung der Erfindung sind die erste Stellachse und die zweite Stellachse zueinander parallel und/oder koaxial orientiert, wobei der wenigstens eine Kontaktstempel in der Kontaktstellung an eine unter- oder oberseitige Stirnfläche der Matrize gepresst ist. Hierdurch wird insbesondere ein konstruktiv einfacher Aufbau der Sintervorrichtung erreicht. Entsprechend der Stellachsen sind die erste Druckkraft und die zweite Druckkraft zueinander parallel und/oder koaxial orientiert. Die unter- oder oberseitige Stirnfläche der Matrize ist vorzugsweise senkrecht zur zweiten Druckkraft und damit der zweiten Stellachse orientiert.

In weiterer Ausgestaltung der Erfindung weist der wenigstens eine Kontaktstempel eine Ringform mit einer Durchgangsöffnung auf, durch welche die erste Stellachse, insbesondere koaxial, längserstreckt ist. Hierdurch kann eine nochmals vereinfachte Konstruktion der Sintervorrichtung erreicht werden. Die Ringform des wenigstens einen Kontaktstempels ist vorzugsweise eine Kreiszylinderform. Die Durchgangsöffnung ist vorzugsweise eine kreiszylindrische Durchgangsöffnung. Eine Axialrichtung der Ringform und/oder der Durchgangsöffnung ist vorzugsweise koaxial zu der zweiten Stellachse orientiert. Vorzugsweise ist der Formstempel und/oder die erste Stelleinrichtung jeweils wenigstens abschnittsweise durch die Durchgangsöffnung längserstreckt. Dies jedenfalls in der Pressstellung. Bei dieser Ausgestaltung der Erfindung weist die Matrize vorzugsweise eine Ringform, insbesondere eine Kreiszylinderform, auf.

In weiterer Ausgestaltung der Erfindung sind die erste Stellachse und die zweite Stellachse zueinander senkrecht orientiert, wobei der wenigstens eine Kontaktstempel in der Kontaktstellung an eine seitliche Außenmantelfläche der Matrize gepresst ist. Die Außenmantelfläche ist senkrecht zur zweiten Stellachse und/oder zweiten Druckkraft orientiert. Bei dieser Ausgestaltung der Erfindung ist die erste Stellachse vertikal und die zweite Stellachse horizontal orientiert oder umgekehrt. Eine solche Orientierung der Stellachsen kann konstruktive Vorteile bieten. Insbesondere kann ein zur Verfügung stehender Bauraum in verbesserter Weise ausgenutzt werden.

In weiterer Ausgestaltung der Erfindung weist die Matrize eine Quaderform auf, wobei die Außenmantelflächen senkrecht zu der zweiten Stellachse und parallel zu der ersten Stellachse orientiert sind. Eine solche Quaderform der Matrize ist insbesondere dann von Vorteil, wenn die Matrize als Mehrfachform mit mehreren Aufnahmeräumen gestaltet ist. Solche Mehrfachformen bieten besondere Vorteile bei der industriellen Fertigung vergleichsweise "kleiner" Sinterteile, wie beispielsweise Schleifstifte oder Bohrer für die Dentalbearbeitung. Durch die Quaderform und entsprechende Orientierung der Außenmantelflächen kann - insbesondere im Vergleich zu einer Zylinderform der Matrize - eine vergleichsweise größere Kontaktfläche zwischen dem wenigstens einen Kontaktstempel und der Außenmantelfläche erreicht werden. Zudem kann ein zur Verfügung stehender Bauraum in verbesserter Weise ausgenutzt werden.

In weiterer Ausgestaltung der Erfindung ist die Matrize als Mehrfachform mit mehreren Aufnahmeräumen gestaltet. Eine solche Gestaltung ist insbesondere in Kombination mit der vorhergehenden Ausgestaltung der Erfindung besonders vorteilhaft. Jedem der mehreren Aufnahmeräume ist wenigstens ein Formstempel zugeordnet, so dass dementsprechend mehrere Formstempel vorgesehen sind.

In weiterer Ausgestaltung der Erfindung ist der wenigstens eine Formstempel elektrisch nicht leitfähig, wobei der wenigstens eine Formstempel aus einem elektrisch isolierenden Werkstoff gefertigt ist und/oder eine elektrisch isolierende Beschichtung aufweist. Hierzu kann der wenigstens eine Formstempel insbesondere aus Keramik gefertigt sein oder eine keramische Beschichtung aufweisen. Aus dem Stand der Technik bekannte Sintervorrichtungen zum feldunterstützten Sintern setzen üblicherweise zwingend eine elektrisch leitfähige Gestaltung des Formstempels oder der Formstempel voraus. Diese Ausgestaltung der Erfindung umgeht die hiermit üblicherweise einhergehende eingeschränkte Werkstoffauswahl.

In weiterer Ausgestaltung der Erfindung ist der wenigstens eine Formstempel aus Metall gefertigt. Eine solche Werkstoffwahl für den Formstempel ist insbesondere, aber nicht ausschließlich, in Verbindung mit einer als Mehrfachform gestalteten Matrize zur Fertigung "kleiner" Sinterteile vorteilhaft. Da der wenigstens eine Formstempel aus Metall gefertigt ist, weist er einen vergleichsweise geringen elektrischen Widerstand auf, was zum Durchführen eines üblichen feldunterstützten Sinterverfahrens aufgrund der damit einhergehenden vergleichsweise geringen widerstandsbedingten Erwärmung nachteilig ist. Dieser Nachteil wird durch die erfindungsgemäße Trennung zwischen Strom- und Druckkraftbeaufschlagung umgangen, da die Strombeaufschlagung über den wenigstens einen Kontaktstempel und damit getrennt von dem wenigstens einen metallischen Formstempel erfolgt.

In weiterer Ausgestaltung der Erfindung wirkt die erste Stelleinrichtung über ein elektrisch und/oder thermisch isolierendes Isolationselement auf den wenigstens einen Formstempel ein.

Mit anderen Worten ausgedrückt, ist die erste Stelleinrichtung mittels des Isolationselements gegenüber dem wenigstens einen Formstempel elektrisch und/oder thermisch isoliert. Dies wirkt einem unerwünschten Strom- und/oder Wärmeabfluss über die erste Stelleinrichtung entgegen. Hierdurch kann eine nochmals verbesserte Strom- und damit Wärmebeaufschlagung des Sintermaterials erreicht werden. Das Isolationselement ist vorzugsweise aus einem keramischen Werkstoff gefertigt.

In weiterer Ausgestaltung der Erfindung sind ein erster Formstempel und ein zweiter Formstempel vorgesehen, die mittels der ersten Stelleinrichtung entlang der ersten Stellachse relativ zueinander gegenläufig stellbeweglich sind, und die in der Pressstellung zueinander gegenläufig axial in den Aufnahmeraum eingetaucht sind. Bei dieser Ausgestaltung ist der Aufnahmeraum in Form einer axial durch die Matrize erstreckten Durchgangsöffnung mit einander gegenüberliegenden Stirnöffnungen gestaltet. Die beiden Formstempel ragen in der Pressstellung jeweils axial in eine der Stirnöffnungen. Zum Aufbringen der ersten Druckkraft werden der erste Formstempel und der zweite Formstempel entlang der ersten Stellachse relativ aufeinander zubewegt. Hierzu kann der erste Formstempel und/oder der zweite Formstempel mittels der ersten Stelleinrichtung stellbeweglich verlagert werden. Mit anderen Worten ausgedrückt, können beide Formstempel oder lediglich einer der beiden Formstempel stellbeweglich verlagert werden.

In weiterer Ausgestaltung der Erfindung sind ein erster Kontaktstempel und ein zweiter Kontaktstempel vorgesehen, der mittels der zweiten Stelleinrichtung entlang der zweiten Stellachse relativ zueinander gegenläufig stellbeweglich sind, und die in der Kontaktstellung an einander gegenüberliegende Außenflächen der Matrize gepresst sind. Je nach Orientierung der zweiten Stellachse können die gegenüberliegenden Außenflächen axial gegenüberliegende Stirnflächen der Matrize oder seitlich gegenüberliegende Außenmantelflächen der Matrize sein. Zum Aufbringen der zweiten Druckkraft werden der erste Kontaktstempel und der zweite Kontaktstempel entlang der zweiten Stellachse relativ aufeinander zubewegt. Hierzu kann der erste Kontaktstempel und/oder der zweite Kontaktstempel mittels der zweiten Stelleinrichtung stellbeweglich verlagert werden. Mit anderen Worten ausgedrückt, können beide Kontaktstempel oder lediglich einer der beiden Kontaktstempel stellbeweglich verlagert werden.

In weiterer Ausgestaltung der Erfindung ist die Widerstandsheizeinrichtung zur Strombeaufschlagung der Matrize mit einem Wechselstrom und/oder einem, insbesondere gepulsten, Gleichstrom eingerichtet. Je nach spezifischem Anwendungsfall und/oder zu sinterndem Sintermaterial kann eine Beaufschlagung mit Wechselstrom oder, insbesondere gepulstem, Gleichstrom besondere Vorteile bieten. Durch diese Ausgestaltung der Erfindung wird somit ein besonders flexibler Einsatz der Sintervorrichtung ermöglicht.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematisch stark vereinfachter Darstellung eine Ausführungsform einer erfindungsgemäßen Sintervorrichtung, die zum feldunterstützten Sintern vorgesehen ist,
- Fig. 2: eine schematische und teilweise abgeschnittene Detaildarstellung einer weiteren Ausführungsform einer erfindungsgemäßen Sintervorrichtung, und
- Fig. 3: eine schematische und teilweise abgeschnittene Detaildarstellung einer weiteren Ausführungsform einer erfindungsgemäßen Sintervorrichtung.

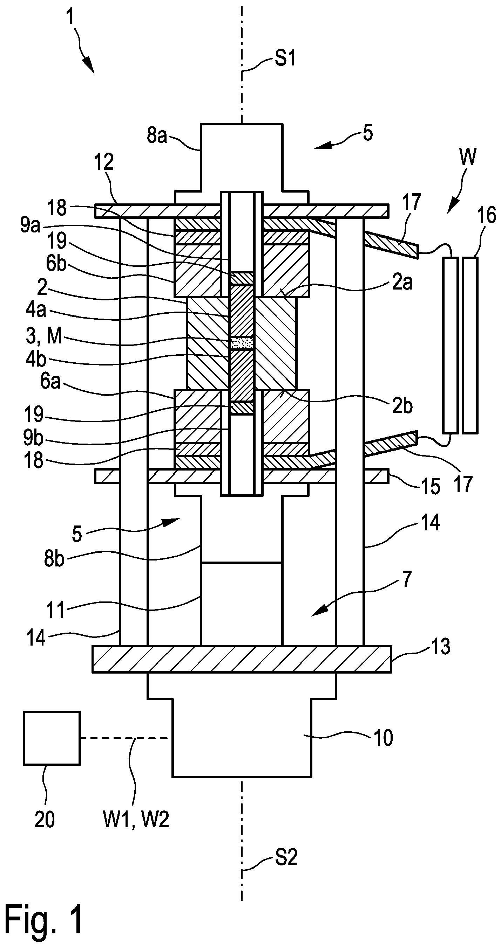

Gemäß Fig. 1 ist eine Sintervorrichtung 1 zum feldunterstützten Sintern und somit zum Durchführen eines FAST- oder SPS-Verfahrens eingerichtet.

Die Sintervorrichtung 1 weist eine Matrize 2 auf, die auch als Form oder Sinterform bezeichnet werden kann. Die Matrize 2 weist einen Aufnahmeraum 3 auf, der zum Aufnehmen eines zu sinternden Sintermaterials M vorgesehen ist. Dabei ist die Matrize 2 aus einem elektrisch leitfähigen Werkstoff gefertigt, wobei vorliegend Graphit als Werkstoff gewählt ist. Das Sintermaterial M ist bei der gezeigten Ausführungsform in Gestalt eines Grünlings, der auch als Pulver-Teil, Pressling oder Grünkörper bezeichnet werden kann, in dem Aufnahmeraum 3 aufgenommen.

Zum feldunterstützten Sintern des Sintermaterials M wird dieses zum einen mechanisch mit Druck beaufschlagt. Zum anderen wird das Sintermaterial M gleichzeitig erhitzt und insoweit mit Wärme beaufschlagt.

Zur Druckbeaufschlagung des Sintermaterials M weist die Sintervorrichtung 1 wenigstens einen Formstempel 4a und eine erste Stelleinrichtung 5 auf. Der Formstempel 4a ist mittels der ersten Stelleinrichtung 5 entlang einer ersten Stellachse S1 relativ zu der Matrize 2 und damit auch dem Aufnahmeraum 3 zwischen unterschiedlichen Stellungen stellbeweglich. Dabei ist anhand der Fig. 1 eine Pressstellung des Formstempels 4a gezeigt, in welcher dieser zur mechanischen Druckbeaufschlagung des Sintermaterials M in axialer Richtung entlang der ersten Stellachse S1 in den Aufnahmeraum 3 eingetaucht ist und hierdurch eine nicht näher bezeichnete erste Druckkraft, die axial entlang der ersten Stellachse S1 wirkt, auf das Sintermaterial M überträgt. Die erste Druckkraft kann auch als Presskraft bezeichnet werden.

Zur Wärmebeaufschlagung des Sintermaterials M weist die Sintervorrichtung 1 eine Widerstandsheizeinrichtung W auf. Der Widerstandsheizeinrichtung W ist wenigstens ein Kontaktstempel 6a und eine zweite Stelleinrichtung 7 zugeordnet. Dabei ist der Kontaktstempel 6a mittels der zweiten Stelleinrichtung 7 entlang einer zweiten Stellachse S2 relativ zu der Matrize 2 zwischen unterschiedlichen Stellungen stellbeweglich. Anhand Fig. 1 ist der Kontaktstempel 6a in einer Kontaktstellung gezeigt. In dieser ist der Kontaktstempel 6a zur elektrischen Strombeaufschlagung der Matrize an eine noch näher bezeichnete Außenfläche der Matrize 2 gepresst. Hierbei wirkt eine zweite Druckkraft, die auch als Kontaktkraft bezeichnet werden kann.

Durch die vorbeschriebene konstruktive Trennung zwischen Druckbeaufschlagung einerseits und andererseits Strom- und damit Wärmebeaufschlagung werden zahlreiche Vorteile erzielt.

Insbesondere können die Press- und die Kontaktkraft voneinander unabhängig gewählt und/oder eingestellt werden. Entsprechendes gilt für die konstruktive Gestaltung der wirksamen Querschnitte und/oder Kontaktflächen des Formstempels 4a und des Kontaktstempels 6a. Mit anderen Worten ausgedrückt, sind die zur elektrischen Strombeaufschlagung wirksamen Abmessungen des Kontaktstempels 6a konstruktiv unabhängig von den für die Druckbeaufschlagung wirksamen Abmessungen des Formstempels 4a. Dies ist insbesondere dann vorteilhaft, wenn ein im Vergleich zu den Abmessungen der Matrize kleiner Formstempel - zum Sintern "kleiner" Sinterteile - erforderlich ist.

Weiterhin ist infolge des erfindungsgemäßen Aufbaus der Sintervorrichtung 1 nicht zwingend erforderlich, dass der Formstempel 4a elektrisch leitfähig ist. Stattdessen kann beispielsweise ein besonders druckstabiler Werkstoff verwendet werden. Umgekehrt ist nicht zwingend erforderlich, dass der Kontaktstempel 6a besonders druckstabil ist, so dass im Hinblick auf eine möglichst optimale Strombeaufschlagung ein besonders leitfähiger Werkstoff verwendet werden kann.

Nachfolgend werden weitere räumlich-körperliche Merkmale und funktionale Merkmale der anhand Fig. 1 gezeigten Ausführungsform im Detail erläutert. Diese Merkmale sind vorteilhaft, aber hinsichtlich der Erfindung als nicht wesentlich und/oder zwingend erforderlich zu erachten.

Bei der anhand Fig. 1 gezeigten Ausführungsform sind die erste Stellachse S1 und die zweite Stellachse S2 koaxial orientiert.

Vorliegend weist die Sintervorrichtung 1 zusätzlich zu dem Formstempel 4a, der auch als erster Formstempel bezeichnet werden kann, einen weiteren Formstempel 4b auf. Dieser kann auch als zweiter Formstempel bezeichnet werden. Der erste Formstempel 4a und der zweite Formstempel 4b sind entlang der ersten Stellachse S1 relativ zueinander gegenläufig stellbeweglich. In der Pressstellung sind die beiden Formstempel 4a, 4b entgegengesetzt axial in den Aufnahmeraum 3 eingetaucht. Dieser ist bei der gezeigten Ausführungsform als axial durch die Matrize 2 erstreckte Durchgangsbohrung gestaltet. Weiter sind die beiden Formstempel 4a, 4b mittels der ersten Stelleinrichtung 5 zueinander relativbeweglich.

Bei der gezeigten Ausführungsform weist die erste Stelleinrichtung 5 einen oberen Presszylinder 8a, 9a und einen unteren Presszylinder 8b, 9b auf. Der obere Presszylinder 8a, 9a wirkt auf den ersten Formstempel 4a. Der untere Presszylinder 8b, 9b wirkt auf den zweiten Formstempel 4b. Der obere Presszylinder 8a, 9a weist einen Grundkörper 8a und einen beweglichen Pressstempel 9a auf. Entsprechendes gilt sinngemäß für den unteren Presszylinder 8b, 9b.

Weiter weist die Sintervorrichtung 1 bei der gezeigten Ausführungsform zusätzlich zu dem Kontaktstempel 6a, der auch als erster Kontaktstempel bezeichnet werden kann, einen weiteren Kontaktstempel 6b auf. Letzterer kann auch als zweiter Kontaktstempel bezeichnet werden. In der gezeigten Kontaktstellung (Fig. 1) sind die beiden Kontaktstempel 6a, 6b an einander gegenüberliegende Stirnflächen 2a, 2b der Matrize 2 gepresst. Zum Aufbringen der zweiten Druckkraft und zur elektrischen Kontaktierung sind die beiden Kontaktstempel 6a, 6b mittels der zweiten Stelleinrichtung 7 entlang der zweiten Stellachse S2 relativ zueinander beweglich. Die zweite Stelleinrichtung 7 ist vorliegend als weiterer Presszylinder gestaltet, wird als Tischzylinder 10, 11 bezeichnet und weist einen Grundkörper 10 und einen relativ zu diesem beweglichen Tischstempel 11 auf.

Bei der gezeigten Ausführungsform sind der obere Presszylinder 8a, 9a, der untere Presszylinder 8b, 9b und der Tischzylinder 10, 11 jeweils als Hydraulikzylinder gestaltet.

Bei einer nicht gezeigten Ausführungsform sind die Presszylinder und der Tischzylinder als Pneumatikzylinder gestaltet. Bei einer weiteren nicht gezeigten Ausführungsform sind stattdessen elektromotorisch angetriebene Kugelspindeln zum Aufbringen der Stellbewegungen entlang der Stellachsen vorgesehen.

Weiter weist die Sintervorrichtung 1 bei der gezeigten Ausführungsform eine Gestellanordnung 12, 13, 14, 15 auf. Diese weist eine positionsfeste obere Platte 12, eine positionsfeste untere Platte 13, mehrere zwischen den positionsfesten Platten 12, 13 längserstreckte Führungssäulen 14 und eine beweglich an den Führungssäulen 14 geführte bewegliche Platte 15 auf. Die obere Platte 12 kann auch als Querhaupt bezeichnet werden. Die untere Platte 13 kann auch als Grundplatte bezeichnet werden. Die bewegliche Platte 15 kann auch als Pressentisch bezeichnet werden.

Bei der gezeigten Ausführungsform sind der Tischzylinder 10, 11 und der untere Presszylinder 8b, 9b quasi kinematisch in Reihe geschaltet. Hierzu ist der untere Presszylinder 8b, 9b auf dem Tischstempel 11 des Tischzylinders 10, 11 abgestützt. Der Grundkörper 10 des Tischzylinders 10, 11 ist fest mit der Grundplatte 13 verbunden. Dementgegen ist der Grundkörper 8b des unteren Presszylinders 8b, 9b fest mit dem Pressentisch 15 verbunden. Der Grundkörper 8a des oberen Presszylinders 8a, 9a ist fest mit dem Querhaupt 12 verbunden.

Die Widerstandsheizeinrichtung W ist zur Strombeaufschlagung der Matrize 2 mit einem Wechselstrom und/oder einem, insbesondere gepulsten, Gleichstrom eingerichtet und weist einen Transformator 16, Anschlusselemente 17, die vorliegend als Kupferanschlüsse ausgeführt sind, sowie Elektroden 18 auf. Diese sind als Messingelektroden ausgeführt. Ausgehend von dem Transformator 16 kann die Matrize 2 über die Anschlusselemente 17, die Elektroden 18 und von dort über die Kontaktstempel 6a, 6b mit Strom beaufschlagt werden.

Die beiden Kontaktstempel 6a, 6b weisen bei der gezeigten Ausführungsform eine Ringform mit jeweils einer nicht näher bezeichneten Durchgangsöffnung auf, durch welche die erste Stellachse S1 der ersten Stelleinrichtung 5 erstreckt ist. Der obere Pressstempel 9a und/oder der erste Formstempel 4a ragt axial in die Durchgangsöffnung des zweiten Kontaktstempels 6b. Der untere Pressstempel 9b und/oder der zweite Formstempel 4b ragt in die Durchgangsöffnung des ersten Kontaktstempels 6a.

Die rückseitig an den Kontaktstempeln 6a, 6b elektrisch kontaktierend angeordneten Elektroden 18 sind dementsprechend ringförmig mit jeweils nicht näher bezeichneten Durchgangsöffnungen für die Pressstempel 9a, 9b gestaltet. Auch die Anschlusselemente 17 weisen in ihrem Kontaktbereich mit den Elektroden 18 jeweils eine solche ringförmige Gestalt auf.

Die Kontaktstempel 6a, 6b sind entlang der zweiten Stellachse S2 zwischen dem Querhaupt 12 und dem Pressentisch 15 angeordnet und über die jeweilige Elektrode 18 und das jeweilige Anschlusselement 17 oberseitig an dem Querhaupt 12 und unterseitig an dem Pressentisch 15 abgestützt.

Zum Anpressen der Kontaktstempel 6a, 6b wird der Pressentisch 15 entlang der zweiten Stellachse S2 in Richtung des Querhaupts 12 und damit - in Bezug auf die Zeichenebene der Fig. 1 - nach oben verlagert. Dies erfolgt unter Einwirkung des Tischzylinders 10, 11, dessen Tischstempel 11 hierbei den unterseitig an dem Pressentisch 15 abgestützten Grundkörper 8b des unteren Presszylinders 8b, 9b anhebt. Sobald die Kontaktstempel 6a, 6b die Kontaktstellung eingenommen und die erforderliche zweite Druckkraft erreicht ist, kann die erforderliche Druckkraftbeaufschlagung des Sintermaterials M über entsprechende Stellbewegungen des oberen Pressstempels 9a und des unteren Pressstempels 9b erfolgen.

Die Formstempel 4a, 4b sind bei der gezeigten Ausführungsform mittels jeweils eines Isolationselements 19 von dem jeweiligen Pressstempel 9a bzw. 9b isoliert. Die Isolationselemente 19 gewährleisten vorliegend eine thermische und elektrische Isolation und sind zu diesem Zweck aus einem keramischen Werkstoff gefertigt.

Zudem sind die Formstempel 4a, 4b jeweils elektrisch nicht leitfähig und hierzu aus einem elektrisch isolierenden Werkstoff, beispielsweise Keramik, gefertigt. Bei einer nicht gezeigten Ausführungsform kann stattdessen lediglich eine elektrisch isolierende Beschichtung der Formstempel vorgesehen sein.

Weiter weist die Sintervorrichtung 1 vorliegend eine Regeleinrichtung 20 auf. Die Regeleinrichtung 20 ist zum Regeln der ersten Druckkraft auf einen ersten Wert W1 und zum Regeln der zweiten Druckkraft auf einen zweiten Wert W2 eingerichtet. Die Regeleinrichtung 20 ist schematisch stark vereinfacht dargestellt. Die anhand Fig. 1 ersichtliche strichlierte Verbindung zwischen der Regeleinrichtung 20 und den übrigen Komponenten der Sintervorrichtung 1 stellt schematisch eine regeltechnische Wirkverbindung mit wenigstens der ersten Stelleinrichtung 5 und der zweiten Stelleinrichtung 7 dar. Mittels der Regeleinrichtung 20 können die Presskraft und die Kontaktkraft getrennt voneinander eingestellt und auf die vorgegebenen Werte W1, W2 eingeregelt werden. Dies ist insbesondere im Zusammenhang mit der vorbeschriebenen kinematischen Reihenschaltung zwischen dem Tischzylinder 10, 11 und dem unteren Presszylinder 8b, 9b vorteilhaft.

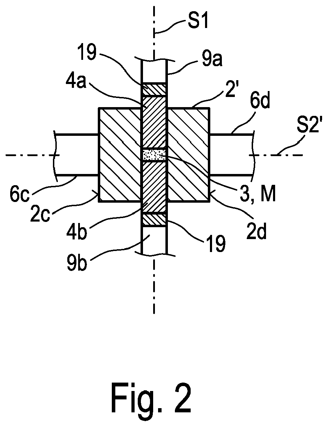

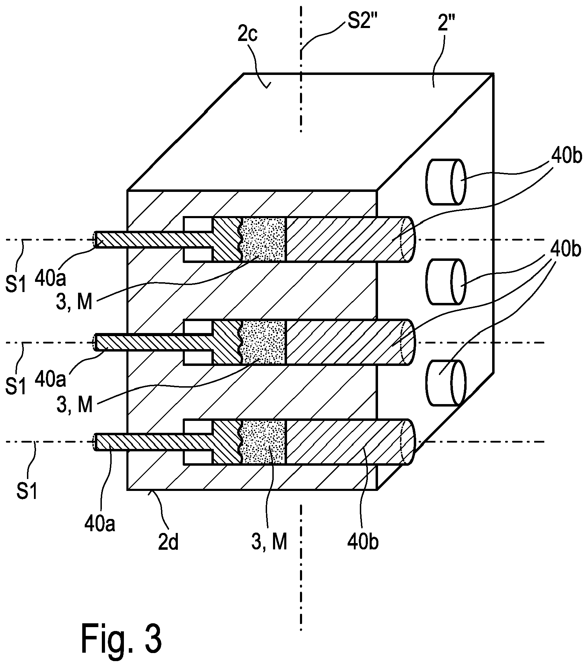

Die Fig. 2 und 3 zeigen Detaildarstellungen weiterer Ausführungsformen erfindungsgemäßer Sintervorrichtungen. Zur Vermeidung von Wiederholungen wird nachfolgend lediglich auf wesentliche Unterschiede der Ausführungsformen nach den Fig. 2 und 3 gegenüber der Ausführungsform nach Fig. 1 eingegangen. Dabei sind identische Bauteile mit identischen Bezugszeichen versehen und werden nicht gesondert erläutert.

Wesentlicher Unterschied der Ausführungsform nach Fig. 2 ist, dass eine senkrecht zur ersten Stellachse S1 orientierte zweite Stellachse S2' vorgesehen ist. Dementsprechend sind die Kontaktstempel 6c, 6d in der gezeigten Kontaktstellung an seitliche Außenmantelflächen 2c, 2d der Matrize 2' gepresst. Die Außenmantelflächen 2c, 2d sind senkrecht zu der zweiten Stellachse S2' orientiert. Um einen möglichst flächigen Kontakt der Kontaktstempel 6c, 6d zu ermöglichen, sind die Außenmantelflächen 2c, 2d planparallel zueinander orientiert, wobei die Matrize 2' eine rechteckige, insbesondere quadratische, Außenkontur aufweist. Dies im Unterschied zu der kreiszylindrischen Gestalt der Matrize 2 nach Fig. 1.

Wesentlicher Unterschied der Ausführungsform nach Fig. 3 ist, dass die Matrize 2" als Mehrfachform mit mehreren Aufnahmeräumen 3 gestaltet ist. Die Aufnahmeräume 3 sind jeweils zum Aufnehmen eines zu sinternden Sintermaterials M vorgesehen, so dass die vorliegende Gestaltung ein gleichzeitiges Sintern mehrerer Sinterteile ermöglicht. Jedem Aufnahmeraum 3 sind jeweils zwei gegenläufig entlang einer ersten Stellachse S1 stellbewegliche Formstempel 40a, 40b zugeordnet. Dabei sind die Formstempel 40a jeweils aus Metall gefertigt. Dies ist insbesondere im Hinblick auf die anhand Fig. 3 ersichtliche abschnittsweise vergleichsweise dünne Gestaltung der Formstempel 40a vorteilhaft. Die nicht näher bezeichnete Kontaktkraft wird entlang der zweiten Stellachse S2" auf Außenmantelflächen 2c, 2d der Matrize 2" aufgebracht. Die zweite Stellachse S2" ist senkrecht zu den ersten Stellachsen S1 der paarweise angeordneten Formstempel 40a, 40b orientiert. Zudem weist die Matrize 2" - ebenso wie die Matrize 2' nach Fig. 2 - eine Quaderform auf, wobei die Außenmantelflächen 2c, 2d senkrecht zu der zweiten Stellachse S2" und parallel zu den ersten Stellachsen S1 orientiert sind.

## Patentansprüche

1. Sintervorrichtung (1) zum feldunterstützten Sintern, aufweisend
- wenigstens eine elektrisch leitfähige Matrize (2, 2', 2") mit einem Aufnahmeraum (3), der zum Aufnehmen eines zu sinternden Sintermaterials (M), insbesondere in Form eines Grünlings, vorgesehen ist,
- eine erste Stelleinrichtung (5) und wenigstens einen Formstempel (4a, 4b, 40a, 40b), der mittels der ersten Stelleinrichtung (5) entlang einer ersten Stellachse (S1) relativ zu dem Aufnahmeraum (3) in eine Pressstellung stellbeweglich ist, in welcher der wenigstens eine Formstempel (4a, 4b, 40a, 40b) zur mechanischen Druckbeaufschlagung des Sintermaterials (M) mit einer ersten Druckkraft axial in den Aufnahmeraum (3) eingetaucht ist,
- und aufweisend eine Widerstandsheizeinrichtung (W), die zum Heizen der Matrize (2, 2', 2") mittels einer elektrischen Strombeaufschlagung derselben eingerichtet ist,
- **dadurch gekennzeichnet, dass** der Widerstandsheizeinrichtung (W) eine zweite Stelleinrichtung (7) und wenigstens ein Kontaktstempel (6a bis 6d) zugeordnet sind, der mittels der zweiten Stelleinrichtung (7) entlang einer zweiten Stellachse (S2, S2', S2") relativ zu der Matrize (2, 2', 2") in eine Kontaktstellung stellbeweglich ist, in welcher der wenigstens eine Kontaktstempel (6a bis 6d) zur elektrischen Strombeaufschlagung der Matrize (2, 2', 2") mit einer zweiten Druckkraft an eine Außenfläche (2a bis 2d) der Matrize (2, 2', 2") gepresst ist.

2. Sintervorrichtung (1) nach Anspruch 1, **dadurch gekennzeichnet, dass** eine Regeleinrichtung (20) vorgesehen ist, die zum Regeln der ersten Druckkraft auf einen ersten Wert (W1) und zum Regeln der zweiten Druckkraft auf einen zweiten Wert (W2) eingerichtet ist.

3. Sintervorrichtung (1) nach Anspruch 1 oder 2, **dadurch gekennzeichnet, dass** die erste Stellachse (S1) und die zweite Stellachse (S2) zueinander parallel und/oder koaxial orientiert sind, wobei der wenigstens eine Kontaktstempel (6a, 6b) in der Kontaktstellung an eine unter- oder oberseitige Stirnfläche (2a, 2b) der Matrize (2) gepresst ist.

4. Sintervorrichtung (1) nach Anspruch 3, **dadurch gekennzeichnet, dass** der wenigstens eine Kontaktstempel (6a, 6b) eine Ringform mit einer Durchgangsöffnung aufweist, durch welche die erste Stellachse (S1), insbesondere koaxial, längserstreckt ist.

5. Sintervorrichtung (1) nach Anspruch 1 oder 2, **dadurch gekennzeichnet, dass** die erste Stellachse (S1) und die zweite Stellachse (S2', S2") zueinander senkrecht orientiert sind, wobei der wenigstens eine Kontaktstempel (6c, 6d) in der Kontaktstellung an eine seitliche Außenmantelfläche (2c, 2d) der Matrize (2', 2") gepresst ist.

6. Sintervorrichtung (1) nach Anspruch 5, **dadurch gekennzeichnet, dass** die Matrize (2', 2") eine Quaderform aufweist, wobei die Außenmantelflächen (2c, 2d) senkrecht zu der zweiten Stellachse (S2', S2") und parallel zu der ersten Stellachse (S1) orientiert sind.

7. Sintervorrichtung (1) nach Anspruch 5 oder 6, **dadurch gekennzeichnet, dass** die Matrize (2") als Mehrfachform mit mehreren Aufnahmeräumen (3) gestaltet ist.

8. Sintervorrichtung (1) nach einem der vorhergehenden Ansprüche, **dadurch gekennzeichnet, dass** der wenigstens eine Formstempel (4a, 4b) elektrisch nicht leitfähig ist, wobei der wenigstens eine Formstempel (4a, 4b) aus einem elektrisch isolierenden Werkstoff gefertigt ist und/oder eine elektrisch isolierende Beschichtung aufweist.

9. Sintervorrichtung (1) nach einem der Ansprüche 1 bis 7, **dadurch gekennzeichnet, dass** der wenigstens eine Formstempel (40a) aus Metall gefertigt ist.

10. Sintervorrichtung (1) nach einem der vorhergehenden Ansprüche, **dadurch gekennzeichnet, dass** die erste Stelleinrichtung (5) über ein elektrisch und/oder thermisch isolierendes Isolationselement (19) auf den wenigstens einen Formstempel (4a, 4b, 40a, 40b) einwirkt.

11. Sintervorrichtung (1) nach einem der vorhergehenden Ansprüche, **dadurch gekennzeichnet, dass** ein erster Formstempel (4a, 40a) und ein zweiter Formstempel (4b, 40b) vorgesehen sind, die mittels der ersten Stelleinrichtung (5) entlang der ersten Stellachse (S1) relativ zueinander gegenläufig stellbeweglich sind, und die in der Pressstellung zueinander gegenläufig axial in den Aufnahmeraum (3) eingetaucht sind.

12. Sintervorrichtung (1) nach einem der vorhergehenden Ansprüche, **dadurch gekennzeichnet, dass** ein erster Kontaktstempel (6a, 6c) und ein zweiter Kontaktstempel (6b, 6d) vorgesehen sind, die mittels der zweiten Stelleinrichtung (7) entlang der zweiten Stellachse (S2, S2', S2") relativ zueinander gegenläufig stellbeweglich sind, und die in der Kontaktstellung an einander gegenüberliegende Außenflächen (2a bis 2d) der Matrize (2, 2', 2") gepresst sind.

13. Sintervorrichtung (1) nach einem der vorhergehenden Ansprüche, **dadurch gekennzeichnet, dass** die Widerstandsheizeinrichtung (W) zur Strombeaufschlagung der Matrize (2, 2', 2") mit einem Wechselstrom und/oder einem, insbesondere gepulsten, Gleichstrom eingerichtet ist.
